# EUROPEAN PATENT SPECIFICATION

(11) **EP 1 093 875 B1**
(45) Date of publication and mention of the grant of the patent: **18.04.2007**
(21) Application number: 99308335.1
(22) Date of filing: 21.10.1999
(51) Int. Cl.: B23B 27/14

(54) **Cutting insert with polycrystalline hard sintered material**
Schneideinsatz mit polykristallinisches hardgesinterdes Material
Plaquette de coupe avec de la matière polycristalline frittée dure

(30) Priority: 22.10.1998 JP 30113298
(43) Date of publication of application: 25.04.2001
(73) Proprietor: Sumitomo Electric Industries, Ltd., Osaka (JP)
(72) Inventor: Kanada, Yasuyuki, Itami Works of Sumitomo Electric Industries, Ltd., Itami-shi, Hyogo (JP); Sahashi, Toshiyuki, Itami Works of Sumitomo Electric Industries, Ltd., Itami-shi, Hyogo (JP); Tomita, Kunihiro, Itami Works of Sumitomo Electric Industries, Ltd., Itami-shi, Hyogo (JP); Nakai, Tetsuo, Itami Works of Sumitomo Electric Industries, Ltd., Itami-shi, Hyogo (JP)
(74) Representative: Cross, Rupert Edward Blount

(56) References cited:
- US-A- 3 152 385
- US-A- 4 643 620
- US-A- 4 714 385
- US-A- 5 771 763
- PATENT ABSTRACTS OF JAPAN vol. 6, no. 246 (M-176), 4 December 1982 (1982-12-04) & JP 57 144604 A (NIPPON TOKUSHU), 7 September 1982 (1982-09-07)

## Description

This invention relates to a polycrystalline sintered body tool in which sharp cutting edges are formed of a polycrystalline sintered body containing cubic boron nitride to allow high-precision, high-surface roughness cutting of a high-hardness material (see for example US-A-4 714 385).

A material formed by sintering minute cBN (cubic boron nitride) particles using various binders, that is, a polycrystalline cBN sintered body shows excellent performance in cutting high-hardness iron-family metals and cast iron. In particular, if used to machine high-hardness hardened steel, high machining accuracy and excellent finished surface roughness are obtained. Thus for hardened steel, conventional grinding is being replaced by cutting using cBN sintered body tools.

But if extremely high machining accuracy and extremely excellent finished surface roughness are required in machining high-hardness materials, cBN sintered body tools cannot meet these requirements. Thus, when the requirements for machining accuracy and finished surface roughness are severe, one has to rely costly grinding even now.

An object of this invention is to provide a cutting tool which can achieve higher machining accuracy and finished surface roughness than before by improving the cutting edge design of a polycrystalline cBN sintered body tool.

According to this invention, there is provided a polycrystalline hard sintered body cutting tool in which a cutting edge is formed of a polycrystalline hard sintered body containing cubic boron nitride by 20 vol% or over, characterized in that a flank and a rake face of the tool or the flank and an edge-strengthening negative land face are connected together by a curved surface as viewed in section, and that the curved surface has a radius of curvature of 0.1 to 5 *µ*m.

The diameter of the cubic boron nitride contained in the polycrystalline sintered body should be 0.01 to 5 µm.

The wedge angle at the cutting edge should be set in the range of 90° to 125° for a tool having a negative land and in the range of 65° to 125° for a tool having no negative land.

If a polycrystalline sintered body is bonded to a tool of a different material, a tool substrate made of a cemented carbide should be used.

The curved surface having a radius of curvature of 5 *µ*m or under should be formed by edge forming by use of a diamond grinder about #3000 to #14000.

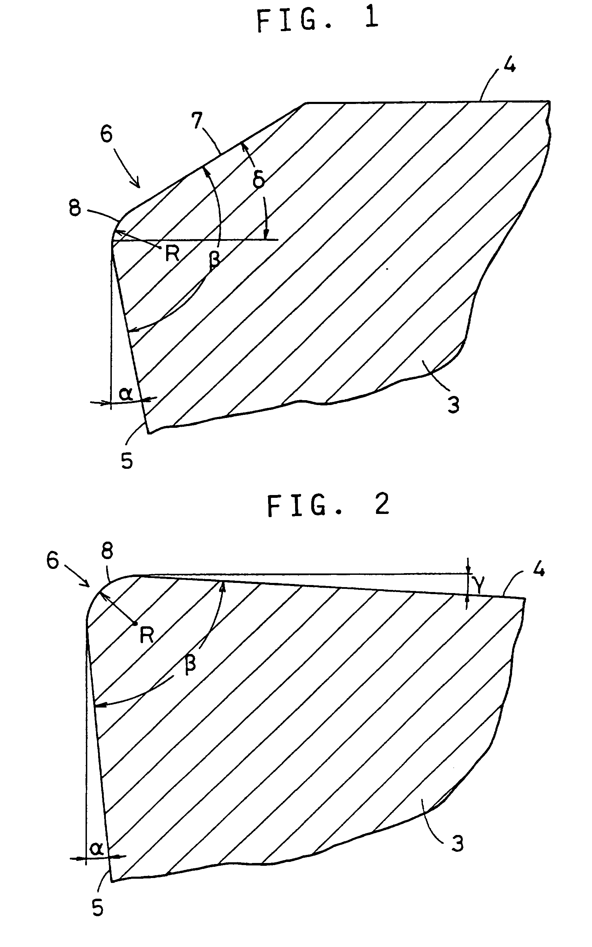

Figs. 1 and 2 are schematic views of cutting tools of polycrystalline sintered body containing cBN near their cutting edges. Cutting edges are formed using a diamond grinder about #800. With the thus finished cutting edges, a flank 5 and a rake face 4 of the tool (Fig. 2), or the flank 5 and an edge-reinforcing negative land 7 (Fig. 1) are connected through a curved portion 8 (or roundness formed by machining). The radius of curvature R of the curved line in a plane perpendicular to the longitudinal direction of the cutting edge is about 10 *µ*m. With the conventional machining method, a smaller radius of curvature is not obtainable.

The present inventors found out that even with such a small radius of curvature, this curved line 8 makes the actual rake of the cutting edge dull, and becomes a cause of incapability of answering severe requirements for machining accuracy and finished surface roughness in the machining of high-hardness materials.

It was also found out that on the machining accuracy and finished surface roughness, cutting force, particularly, its back component force has a large influence, and that conventional cutting edges having the curved line 8 having a radius of curvature R of about 10*µ* m are not sharp enough, and due to low sharpness, the back component force becomes high and higher cutting force causes rapid cutting edge wear. As a result, machining accuracy and finished surface roughness are limited.

In the cutting of high-hardness materials, the back component force is especially high, and variation in the back component force is also large, so that the degree of sharpness of the edge greatly influences the machining accuracy and finished surface roughness. Based on these findings, the inventors first studied a method for obtaining a curved line 8 having a radius of curvature R not exceeding 10 *µ*m, and found out that this object is attainable by forming a cutting edge by grinding with a diamond grinder having an extremely small diamond abrasive grain size of about #3000-#14000.

Next, cutting tests using samples were conducted to determine an optimum value for the radius of curvature R of the curved line 8. It was found out to be 0.1 to 5 *µ*m, preferably 0.1 to 1 *µ*m. For sharpness, the smaller the radius of curvature R, the better. But practically, it is difficult to obtain a smaller radius of curvature than 0.1 *µ*m by edge forming by grinding. Thus, the lower limit of R is 0.1 *µ*m.

If a curved line formed between the flank and the rake face or between the flank and the negative land is in the range of 0.1 to 5 *µ*m, the effective rake of the tool becomes small, so that the sharpness of the cutting edge improves, the cutting resistance, particularly back component force decreases, and better machining accuracy and finished surface roughness than conventional are obtained in the machining of high-hardness material.

Incidentally, in machining a high-hardness material, high hardness is also required for the tool material. Thus the sintered body used in this invention has the cBN content of 20 vol% or over. Also, since polycrystalline sintered body is less likely to chip due to cleavage than monocrystalline one, the sintered body should be polycrystalline.

If the cBN particles contained in the polycrystalline sintered body is less than 0.01 *µ*m, aggregate portions that can cause chipping of the cutting edge tend to be produced in the sintered body. On the other hand, if the cBN particles are larger than 5 *µ*m, dropping of the particles makes it difficult to control the radius of curvature of the edge portion in the desired range. Thus, the particle diameter of the cBN particles is preferably in the range of 0.01 to 5 *µ*m.

Also, if the intersecting angle between the flank and the rake race is less than 65°, the wedge angle of the cutting edge is too small, so that chipping tends to occur at the cutting edge in the initial stage of cutting.

Also, if the intersecting angle between the flank and the rake face or between the rake face and the negative land surface exceeds 125°, an increase in the cutting force becomes remarkable, so that desired machining accuracy is not obtainable. Thus, the intersecting angle is preferably controlled in the range of 65-125°.

For the tool substrate to which the hard sintered body is bonded, a steel material may be used. But for high-accuracy machining of a high-hardness material, high rigidity is required for the tool substrate, too. Thus a cemented carbide alloy should be used as a tool substrate.

Other features and objects of the present invention will become apparent from the following description made with reference to the accompanying drawings, which are provided by way of example:
Fig. 1 is a schematic view in section showing one example of a cutting edge of a tool of this invention;
Fig. 2 is a schematic view in section showing another example of the same;
Fig. 3A is a perspective view of a triangular insert according to this invention;
Fig. 3B is a perspective view of a square insert according to this invention; and
Fig. 3C is a perspective view of a diamond-shaped insert according to this invention.

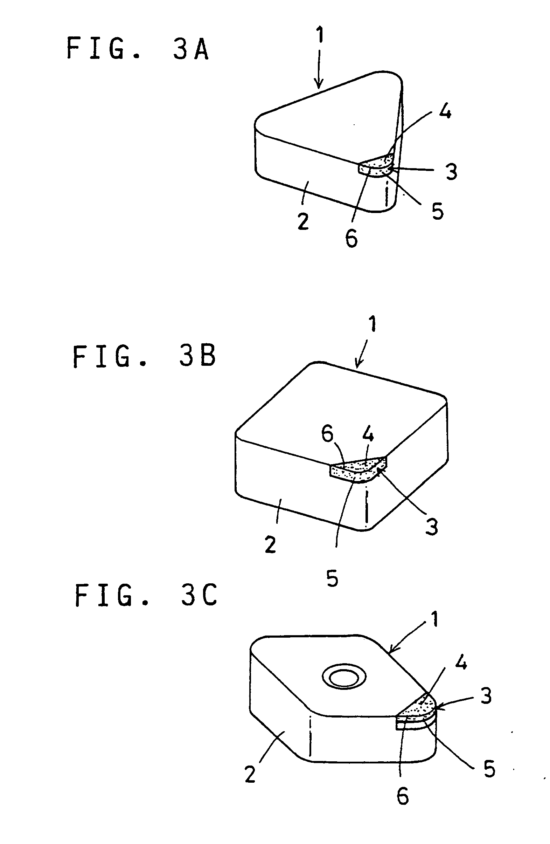

In Figs. 3A to 3C, embodiments of a cutting tool of this invention are shown. These are examples in which this invention is applied to a cutting insert. Each insert 1 has a pocket provided at one corner of a tool substrate 2 of cemented carbide. On the pocket, a cBN polycrystalline sintered body 3 (that of Fig. 3C has a cemented carbide base) containing 20 vol% or more cBN particles having a diameter of 0.01-5 *µ*m is brazed, and then a cutting edge is formed on the sintered body. For edge forming, a diamond grinder of #3000-#14000 is used to form a cutting edge 6 at the intersection between the rake face 4 and the flank 5.

The cutting edge 6 has a sectional shape having an edge-strengthening negative land 7 as shown in Fig. 1, or a sectional shape having no such negative land as shown in Fig. 2, with the portion between the flank 5 and the rake face 4 or the the portion between the flank 5 and the negative land face 7 connected together by a curved surface 8 having a radius of curvature of 0.1 to 5 *µ*m.

γ in Figs. 1 and 2 represents the rake angle of the tool, α is the relief angle, δ in Fig. 1 is the negative land angle (that is, intersecting angle between the negative land face 7 and the flank 5), and β in Figs. 1 and 2 is the wedge angle at the cutting edge. With the cutting insert of Fig. 3, β is preferably 90° to 125° for the one having the cutting edge structure of Fig. 1 with a negative land, and 65° to 125° for the one having the cutting edge structure of Fig. 2 with no negative land.

Cutting inserts to which this invention is applied are not limited to the shape shown in Figs. 3A to 3C. Also, tools to which this invention is applied are not limited to cutting inserts.

Hereinbelow, examples of this invention are described.

### (Example 1)

Cutting inserts were prepared by brazing a small piece of cBN polycrystalline sintered body containing 50 vol% cBN particles having a particle diameter of about 0.5 *µ*m to a corner of cemented carbide tool substrate. The cutting insert specimens were four kinds as shown in Table 1. Any of them had a cutting edge having the sectional shape shown in Fig. 1. For Comparative Article A, the edge was formed by grinding using a diamond grinder of #800, while for Articles B, C, D of the invention, the cutting edges were formed by grinding using a diamond grinder of #3000 or over. Thus, the radii of curvature of the curved lines 8 formed between the flank 5 and the negative land face 7 differed from each other as shown in Table 1.

For these four specimens A-D, cutting performance was evaluated by conducting cutting tests under the following cutting conditions. The results are shown in Table 2.

### Cutting conditions

Cutting method: outer-diameter turning
Material cut: cylindrical carburized hardened steel (SCM415)
Hardness of the material: HRC 62
Rotating speed at the outer circumferential surface of the material: 100 m/min
Depth of cut: 0.2 mm
Feed: 0.05 mm/rev
Cutting time: 5 minutes
Required finish outer diameter: 30 mm ± 10 *µ*m
Required roundness: 3 *µ*m or less tolerance

As is apparent from Table 2, for Comparative Article A, required finish diameter and required roundness were not obtained. In contrast, for any of Articles B, C, D, which are articles according to the invention, required accuracy was met. Thus, it was confirmed that it is effective to restrict the radius of curvature R of the curved line 8 in Figs. 1, 2 to less than 5 *µ*m.

### (Example 2)

In order to examine the influence of the particle diameter of cBN particles contained in the hard sintered body on the radius of curvature of the curved line 8 and machining accuracy, polycrystalline hard sintered bodies each containing 65 vol% cBN particles having different particle diameters shown in Table 3 were prepared, and the sintered bodies were brazed to tips of columnar cemented carbide shanks of 5 mm diameter to prepare boring cutting inserts of Comparative Articles E, J, and Articles F-I, which are articles according to the invention.

For specimens E-J, cutting edges were formed using a diamond grinder of #10000.

The radius of curvature of a curved line formed at the intersection between the flank and the negative land face of cutting edge of each specimen by the edge forming is shown in Table 3.

For Comparative Article E, due to aggregation of cBN particles, the tool structure was uneven, so that chipping occurred at the edge during edge forming.

Next, to evaluate cutting performance of Specimens F-J, i.e. specimens other than Comparative Example E in which forming of cutting edges was unsuccessful, cutting test was carried out under the following conditions:

### Cutting conditions

Cutting method: inner-diameter boring
Material cut: cylindrical bearing steel (SUJ2)
Hardness of the material: HRC 60
Rotating speed at the inner circumferential surface of the material: 80 m/min
Depth of cut: 0.05 mm
Feed: 0.04 mm/rev
Cutting time: 3 minutes
Required finish inner diameter: 5.5 mm ± 5*µ*m
Required roundness: 2 *µ*m or less tolerance

The results of the cutting test are shown in Table 4.

For Comparative Article J, in which the cBN particle diameter was large, so that the radius of curvature of the curved surface formed between the flank and the negative land face was about 10 *µ*m, cutting force and fluctuations in the cutting force were large, so that chattering occurred during cutting, making it impossible to continue machining. In contrast, for any of Articles F-I, which were articles according to the invention, the required accuracy was met. Thus it was found out that the particle diameter of the cBN particles also has a large influence on the effect of the invention.

### (Example 3)

It was studied how the intersecting angle between the flank and the rake face of the tool or between the flank and the negative land face, and the wedge angle of the cutting edge influence machining performance and machining accuracy.

For this purpose, cutting inserts K-S were prepared by brazing cBN polycrystalline sintered bodies containing 63 vol% cBN particles having particle diameter of 0.7 *µ*m to a corner of a cemented carbide tool substrate. For these specimens, cutting edges were formed using a diamond grinder of #8000. The radii of curvature of the curved lines at the cutting edges were all about 1 *µ*m and practically no different from each other. The relief angle (α in Fig. 1), negative land angle (δ in Fig. 1), and wedge angle at the cutting edge (β in Fig. 1) for each specimen are shown in Table 5.

The evaluation results for the specimens of Table 5 are shown in Table 6. Cutting conditions for the evaluation are as follows.

### Cutting conditions

Cutting method: outer-diameter turning
Material cut: cylindrical dies steel (SKDII)
Hardness of the material: HRC 65
Rotating speed at the outer circumferential surface of the material: 100 m/min
Depth of cut: 0.1 mm
Feed: 0.1 mm/rev
Required finish outer diameter: 15 mm ± 8*µ*m
Required roundness: 3 *µ*m or less tolerance

In this test, for Specimen K, which was small in the wedge angle at the cutting edge, the cutting edge strength was insufficient, so that cutting edge chipped at the initial stage of cutting and it became impossible to continue machining.

Also, for Specimen S, of which the wedge angle was over 125°, cutting force and fluctuation in the cutting force were large, so that chattering occurred during cutting and evaluation was impossible. In contrast, for any of Specimens L-R, the required accuracy was met.

As will be apparent from the test results, if the wedge angle at the cutting edge is set suitably with the radius of curvature of the curved line formed at the intersection between the flank and the rake face or between the flank and the negative land face controlled at 5 *µ*m or under, high-accuracy machining of high-hardness material becomes possible.

The polycrystalline hard sintered body tool of this invention provides improved sharpness of the cutting edge by reducing the radius of curvature of a curved line formed at the intersection between the flank and the rake face or between the flank and the negative land face by cutting edge forming to a size of 5 *µ*m or under. This is achieved by diameter adjustment of cBN particles contained in the hard sintered body and by using a diamond grinder that is extremely low in abrasive grain diameter, i.e. #3000 or over. Thus in the machining of a high-hardness material, machining accuracy and finished surface roughness better than conventional are obtained. Also even for machining in which extremely high machining accuracy and extremely excellent finished surface roughness are required, it is possible to reduce the machining cost by replacing grinding with cutting.

**[Table 1]**

| Specimen | Diamond grinder used for edge forming | Radius of curvature of curved line at cutting edge |
|---|---|---|
| Comparative article A | #800 | 10 *µ*m |
| Article of invention B | #3,000 | 5 µm |
| Article of invention C | #8,000 | 1 *µ*m |
| Article of invention D | #14,000 | 0.5 µm |

**[Table 2]**

| | | |
|---|---|---|
| Specimen | Finished diameter of workpiece | Roundness |
| | (in mm) | (in *µ*m) |
| Comparative article A | 30.015 | 3.2 |
| Article of invention B | 30.009 | 2.3 |
| Article of invention C | 30.006 | 1.5 |
| Article of invention D | 30.003 | 1.2 |

**[Table 3]**

| Specimen | Diameter of cBN particles | Radius of curvature of curved line at cutting edge |
|---|---|---|
| | (in *µ*m) | (in *µ*m) |
| Comparative article E | 0.005 | chipping occurred |
| Article of invention F | 0.01 | 0.5 |
| Article of invention G | 0.1 | 0.8 |
| Article of invention H | 1.0 | 1.0 |
| Article of invention I | 5.0 | 5.0 |
| Comparative article J | 8.0 | 10.0 |

**[Table 4]**

| Specimen | Finished inner diameter of workpiece | Roundness |
|---|---|---|
| | (in mm) | (in µm) |
| Article of invention F | 5.502 | 1.0 |
| Article of invention G | 5.497 | 1.1 |
| Article of invention H | 5.504 | 1.2 |
| Article of invention I | 5.495 | 2.0 |
| Comparative article J | chattering occurred | --- |

**[Table 5]**

| Specimen | Relief angle | Negaland angle | Wedge angle at cutting edge |
|---|---|---|---|
| K | 30° | 0° | 60° |
| L | 25° | 0° | 65° |
| M | 15° | 0° | 75° |
| N | 15° | 15° | 90° |
| O | 15° | 30° | 105° |
| P | 0° | 15° | 105° |
| Q | 0° | 25° | 115° |
| R | 0° | 35° | 125° |
| S | 0° | 40° | 130° |

**[Table 6]**

| Specimen | Finished outer diameter of workpiece | Roundness |
|---|---|---|
| | (in mm) | (in µm) |
| K | chipping occurred at initial stage | --- |
| L | 15.001 | 1.1 |
| M | 14.998 | 1.1 |
| N | 14.997 | 1.2 |
| O | 14.995 | 1.5 |
| P | 15.006 | 1.6 |
| Q | 14.993 | 1.9 |
| R | 15.008 | 2.5 |
| S | chattering occurred | --- |

## Claims

1. A polycrystalline hard sintered body cutting tool in which a cutting edge (6) is formed of a polycrystalline hard sintered body (3) containing cubic boron nitride by 20 vol% or over, **characterized in that** a flank (5) and a rake (4) face of the tool or the flank (5) and an edge-strengthening negative land face (7) are connected together by a curved surface (8) as viewed in section, and that said curved surface (8) has a radius of curvature of 0.1 to 5 µm.

2. A cutting tool as claimed in claim 1, wherein the diameter of the cubic boron nitride contained in said polycrystalline sintered body is 0.01 to 5 *µ*m.

3. A cutting tool as claimed in claim 1 or claim 2, wherein the wedge angle at the cutting edge (6) is set in the range of 90°C to 125°C for a tool having a negative land and in the range of 65°C to 125°C for a tool having no negative land.

4. A cutting tool as claimed in any of claims 1 to 3, wherein said polycrystalline sintered body (3) is bonded to a tool substrate (2) made of a cemented carbide.

## Patentansprüche

1. Schneideinsatz mit polykristallinem, hart gesintertem Material, bei dem eine Schneidkante (6) aus einem polykristallinen, hart gesinterten Körper (3) gebildet ist, der kubisches Bornitrid mit 20 Vol-% oder darüber enthält, **dadurch gekennzeichnet, dass** eine Flanke (5) und eine Spanfläche (4) des Werkzeugs oder der Flanke (5) und eine kantenverfestigende, negative Zungenfläche (7) miteinander durch eine gekrümmte Fläche (8), im Schnitt gesehen, verbunden sind, und dass die gekrümmte Fläche (8) einen Krümmungsradius von 0,1 bis 5 µm besitzt.

2. Schneideinsatz nach Anspruch 1, wobei der Durchmesser des kubischen Bornitrids, das in dem polykristallinen, gesinterten Körper enthalten ist, 0,01 bis 5 µm beträgt.

3. Schneideinsatz nach Anspruch 1 oder Anspruch 2, wobei der Keilwinkel an der Schneidkante (6) in dem Bereich von 90° bis 125° für ein Werkzeug, das eine negative Zunge besitzt, und in dem Bereich von 65° bis 125° für ein Werkzeug, das keine negative Zunge besitzt, eingestellt ist.

4. Schneideinsatz nach einem der Ansprüche 1 bis 3, wobei der polykristalline, gesinterte Körper (3) an einem Werkzeugsubstrat (2), das aus zementiertem Karbid gebildet ist, angebondet ist.

## Revendications

1. Outil de coupe à corps fritté dur polycristallin dans lequel une arête coupante (6) est constituée d'un corps fritté dur polycristallin (3) contenant du nitrure de bore cubique à 20% en volume ou plus, **caractérisé en ce qu'**un flanc (5) et une face inclinée (4) de l'outil ou le flanc (5) et une face de dépouille négative de renforcement de l'arête (7) sont reliés par une surface incurvée (8) vue en coupe et **en ce que** ladite surface incurvée (8) présente un rayon de courbure de 0,1 à 5 µm.

2. Outil de coupe selon la revendication 1, dans lequel le diamètre du nitrure de bore cubique contenu dans ledit corps fritté polycristallin est de 0,01 à 5 µm.

3. Outil de coupe selon la revendication 1 ou 2, dans lequel l'angle de taillant au niveau de l'arête de coupe (6) est de l'ordre de 90° à 125° pour un outil ayant une dépouille négative et de l'ordre de 65° à 125° pour un outil n'ayant pas de dépouille négative.

4. Outil de coupe selon l'une des revendications 1 à 3, dans lequel ledit corps fritté polycristallin (3) est lié à un substrat d'outil (2) constitué d'un carbure cémenté.
